# EUROPEAN PATENT APPLICATION

(11) **EP 4 434 864 A1**
(43) Date of publication of application: **25.09.2024**
(21) Application number: 22924168.2
(22) Date of filing: 21.12.2022
(51) Int. Cl.: B62K 5/10, B62K 5/027, B62K 5/08

(54) **TILTING VEHICLE**

(30) Priority: 26.01.2022 WO PCT/JP2022/002873
(71) Applicant: Yamaha Hatsudoki Kabushiki Kaisha, Iwata-shi, Shizuoka 438-8501 (JP)
(72) Inventor: TERADA, Keisuke, Iwata-shi, Shizuoka 438-8501 (JP); OHNISHI, Seigo, Iwata-shi, Shizuoka 438-8501 (JP)
(74) Representative: Stöckeler, Ferdinand
(86) International application number: PCT/JP2022/047134
(87) International publication number: WO 2023/145320

(57) **Abstract**

A leaning vehicle (1) includes: wheels including front steered wheels (11) and a rear wheel (12); a leaning actuator (120) that is configured to generate a leaning drive force for changing a lean angle of a vehicle body; a steering actuator (110) that is configured to change a steered angle of the front steered wheels (11); and a control device (100) that is configured to control the leaning actuator (120) and the steering actuator (110). When a turning state, in which a lean angle that the vehicle body forms with a perpendicular axis perpendicular to a ground surface, is set to an angle that a resultant force of a gravitational force and a centrifugal force directed toward an outer side of a turn forms with the perpendicular axis is defined as a balanced turning state, the control device (100) is configured to control the leaning actuator (120) and the steering actuator (110) so as to create an imbalanced turning state in which a lateral acceleration occurs that is larger than a lateral acceleration acting on the vehicle body in the balanced turning state, and, when the magnitude of the lateral acceleration acting on the vehicle body in the imbalanced turning state has decreased, control the leaning actuator (120) so as to reduce the magnitude of the leaning drive force.

## Description

### TECHNICAL FIELD

This disclosure relates to a leaning vehicle that turns by leaning the vehicle body.

### BACKGROUND ART

Conventionally, leaning vehicles that turn by leaning the vehicle body are known. For example, Patent Literature 1 discloses a leaning vehicle including two front wheels and one rear wheel. In the leaning vehicle, the state of the vehicle that is turning can be controlled. When a rider operates a handlebar to start to turn from a moving-straight-forward state, the directions of the front wheels are set to a steered angle according to the handlebar operation. Further, when the rider operates the handlebar to start to turn, the vehicle body assumes a lean angle so as to lean toward the center of the turn. In the leaning vehicle described in Patent Literature 1, it is proposed to control the steered angle and the lean angle such that an additional centripetal force is generated for the front steered wheels and the rear wheel that are leaned during turning.

### Citation List

### Patent Literature

Patent Literature 1: International Publication No. WO 2020/138395

### SUMMARY OF THE INVENTION

### Technical Problem

In a leaning vehicle in which a control device controls the steered angle and the lean angle, it is conceivable that the control device executes control of a leaning drive force in addition to the control of the steered angle and the control of the lean angle.

One of the objects of this disclosure is to provide a leaning vehicle in which a control device controls the steered angle and the lean angle, and in which the control device can execute control of the leaning drive force in addition to the control of the steered angle and the control of the lean angle.

### Solution to Problem

A leaning vehicle according to this disclosure includes: wheels including two front steered wheels and at least one rear wheel; a leaning actuator that is configured to generate a leaning drive force for changing a lean angle of a vehicle body when the leaning vehicle turns; a steering actuator that is configured to change a steered angle of the two front steered wheels when the leaning vehicle turns; and a control device that is configured to control at least the leaning actuator and the steering actuator. The leaning vehicle turns by leaning the vehicle body. When such a turning state in which a lean angle that the vehicle body forms with a perpendicular axis perpendicular to a ground surface is set to an angle that a resultant force, acting on the vehicle body, of a gravitational force and a centrifugal force directed toward an outer side of a turn forms with the perpendicular axis is defined as a balanced turning state, the control device is configured to control the leaning actuator and the steering actuator so as to create an imbalanced turning state in which a lateral acceleration occurs that is larger than a lateral acceleration acting on the vehicle body in the balanced turning state, and, when the magnitude of the lateral acceleration acting on the vehicle body in the imbalanced turning state has decreased, control the leaning actuator so as to reduce the magnitude of the leaning drive force.

In the above-described configuration, the control device may be configured to control the leaning actuator and the steering actuator so as to create the imbalanced turning state in which the lateral acceleration occurs that is larger than the lateral acceleration acting on the vehicle body in the balanced turning state, and, when the magnitude of the lateral acceleration acting on the vehicle body in the imbalanced turning state has decreased, control the leaning actuator so as to reduce the magnitude of the leaning drive force by changing at least one value among a current, a voltage, and electric power that are applied to the leaning actuator.

In the above-described configuration, the control device may be configured to control the leaning actuator and the steering actuator so as to create the imbalanced turning state in which the lateral acceleration occurs that is larger than the lateral acceleration acting on the vehicle body in the balanced turning state, and, when the magnitude of the lateral acceleration acting on the vehicle body in the imbalanced turning state has decreased, control the leaning actuator so as to reduce the magnitude of the leaning drive force by controlling the leaning actuator according to a physical quantity that is detected by a sensor and reflects the magnitude of the lateral acceleration.

In the above-described configuration, the control device may be configured to control the leaning actuator and the steering actuator so as to create the imbalanced turning state in which the lateral acceleration occurs that is larger than the lateral acceleration acting on the vehicle body in the balanced turning state, and, when the magnitude of the lateral acceleration acting on the vehicle body in the imbalanced turning state has decreased, control the leaning actuator so as to reduce the magnitude of the leaning drive force by controlling the leaning actuator according to at least one of a handlebar angle, the steered angle, the lean angle, a vehicle speed, and the lateral acceleration that are detected by sensors and reflect the magnitude of the lateral acceleration.

### Advantageous Effects of the Invention

According to this disclosure, a leaning vehicle is provided in which the control device can execute control of the leaning drive force in addition to control of the steered angle and control of the lean angle.

### BRIEF DESCRIPTION OF THE DRAWINGS

[FIG. 1] FIG. 1 is a view for describing an overview of a leaning vehicle according to an embodiment.
[FIG. 2] FIG. 2 is a view for describing imbalanced turning control of the leaning vehicle.
[FIG. 3] FIG. 3 is a view for describing control of a steered angle by a control device.
[FIG. 4] FIG. 4 is a view for describing control of a lean angle by the control device.
[FIG. 5] FIG. 5 is a view for describing an example of the imbalanced turning control of the leaning vehicle.
[FIG. 6] FIG. 6 is a view for describing a method of determining the steered angle and the lean angle for setting a lateral acceleration acting on the center of gravity of the leaning vehicle to a target lateral acceleration.
[FIG. 7] FIG. 7 is a view for describing another method of determining the steered angle and the lean angle for setting the lateral acceleration acting on the center of gravity of the leaning vehicle to the target lateral acceleration.
[FIG. 8] FIG. 8 is a view showing a specific example of the leaning vehicle.
[FIG. 9] FIG. 9 is a view for describing specific examples of a steering device, a leaning device, and the control device.
[FIG. 10] FIG. 10 is a view for describing operation of the leaning device.
[FIG. 11] FIG. 11 is a view for describing an example of the imbalanced turning control that is performed using a vehicle speed and a handlebar angle.
[FIG. 12] FIG. 12 is a view for describing an example of the imbalanced turning control that is performed using feedback control.
[FIG. 13] FIG. 13 is a view showing another specific example of the leaning vehicle.
[FIG. 14] FIG. 14 is a view for describing leaning drive force control that is performed in the vehicle.
[FIG. 15] FIG. 15 is a view for describing a specific example of the leaning drive force control.
[FIG. 16] FIG. 16 is a view for describing another specific example of the leaning drive force control.

### MODES FOR CARRYING OUT THE INVENTION

A leaning vehicle according to this disclosure will be described below with reference to the accompanying drawings. The leaning vehicle has a plurality of wheels. While the numbers of front wheels and rear wheels included in the leaning vehicle are not particularly limited, in this embodiment, a leaning vehicle including two front wheels and one rear wheel will be described as an example. Hereinafter, the leaning vehicle will be referred to simply as a "vehicle."

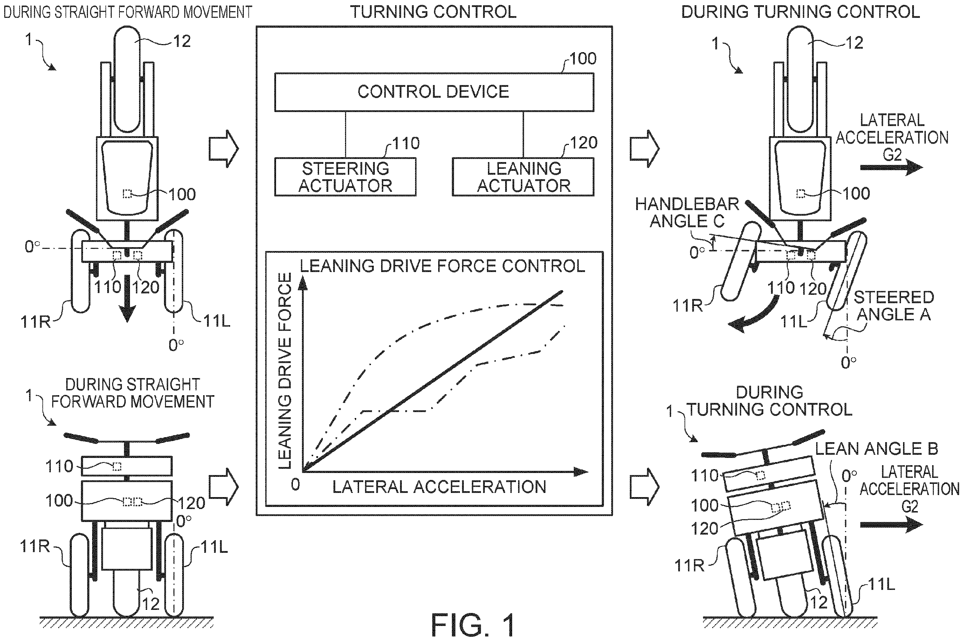

FIG. 1 is a schematic view for describing a vehicle 1 according to this embodiment. With a front face of the vehicle 1 as the front side, FIG. 1 schematically shows, on the upper left side, a top view of the vehicle 1 that is moving straight forward, and below it a front view of the same vehicle 1. On the right side of FIG. 1, a top view and a front view of the vehicle 1 that is turning are schematically shown. When the vehicle 1 shown on the left side of FIG. 1 that is moving straight forward turns, imbalanced turning control of the vehicle 1 is performed by a control device 100 shown at the center of FIG. 1, so that the vehicle 1 turns in a vehicle state shown on the right side of FIG. 1. In top views shown in this embodiment of the vehicle 1 that is turning, directions of steered wheels are indicated while depiction of a lean of the vehicle 1 is omitted, and in front views, the lean of the vehicle 1 is shown while depiction of the directions of the steered wheels is omitted.

As shown in FIG. 1, the vehicle 1 includes: wheels 11, 12 including two front steered wheels 11 (11L, 11R) and at least one rear wheel 12; a steering actuator 110 that is configured to change a steered angle A of the two front steered wheels 11 when the vehicle 1 turns; a leaning actuator 120 that is configured to change a lean angle B of the vehicle 1 when the vehicle 1 turns; and the control device 100 that is configured to control at least the leaning actuator 120 and the steering actuator 110. The steered angle A and the lean angle B of the vehicle 1 are changed as the steering actuator 110 and the leaning actuator 120 are controlled by the control device 100. The vehicle 1 turns as the steered angle A and the lean angle B are changed from the steered angle A and the lean angle B of a moving-straight-forward state.

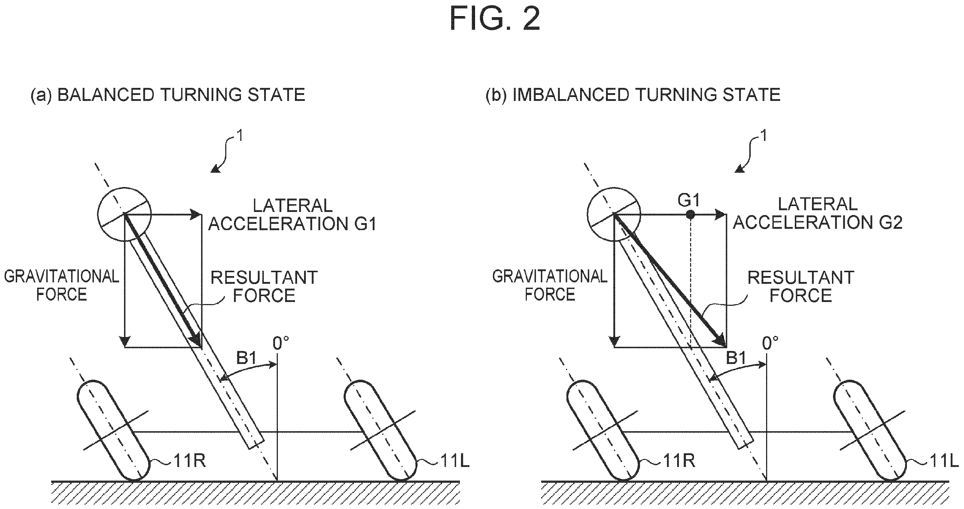

A conventional vehicle in which the imbalanced turning control is not performed turns in a balanced turning state. The balanced turning state refers to such a turning state in which, when the vehicle 1 turns, the lean angle B that the vehicle 1 forms with a perpendicular axis perpendicular to a ground surface is set to an angle that a resultant force, acting on the center of gravity of the vehicle 1, of a centrifugal force directed toward an outer side of the turn and the gravitational force forms with the perpendicular axis (see FIG. 2).

As the control device 100 executes the imbalanced turning control when the vehicle 1 turns, the vehicle 1 turns in an imbalanced turning state in which a lateral acceleration acts on the vehicle 1 that is larger than a lateral acceleration acting in the balanced turning state. For example, the lateral acceleration according to a vehicle speed is prepared beforehand as setting information, and the control device 100 executes the imbalanced turning control based on the setting information such that the lateral acceleration of the vehicle 1 is set to a value according to the vehicle speed.

FIG. 2 is a view for describing the imbalanced turning control of the vehicle 1. As shown in FIG. 2 (a), the conventional vehicle that turns in the balanced turning state turns such that the angle between the resultant force of the gravitational force and the centrifugal force directed toward the outer side of the turn (in FIG. 2 (a), "LATERAL ACCELERATION G1") and the perpendicular axis perpendicular to the ground surface (in FIG. 2 (a), "0°") is set to a lean angle B1 of the vehicle. For example, the conventional vehicle traveling on a substantially horizontal ground surface turns such that the angle between the vector of the resultant force and the vector of the gravitational force is set to the same as the lean angle B1 of the vehicle.

By contrast, as shown in FIG. 2 (b), under the imbalanced turning control executed by the control device 100, the vehicle 1 turns in the imbalanced turning state in which a lateral acceleration G2 occurs that is larger than the lateral acceleration G1 that occurs in the balanced turning state. In the imbalanced turning state, the angle between the resultant force of the gravitational force and the centrifugal force directed toward the outer side of the turn (in FIG. 2 (b), "LATERAL ACCELERATION G2") and the perpendicular axis perpendicular to the ground surface is set to an angle different from the lean angle B1 of the vehicle. For example, the vehicle 1 traveling on a substantially horizontal ground surface turns such that the angle between the vector of the resultant force and the vector of the gravitational force is set to an angle larger than the lean angle B1 of the vehicle.

The lateral acceleration acting on the center of gravity of the vehicle 1 and the lean angle of the vehicle 1 can be acquired using a measurement device, such as an inertial measurement unit (IMU). The lateral acceleration in the balanced turning state can be calculated from the lean angle acquired by the measurement device. When the imbalanced turning control by the control device 100 is executed, the lateral acceleration obtained by the measurement device indicates a larger value than the lateral acceleration calculated based on the lean angle. By comparing the lateral acceleration calculated from an actually measured value of the lean angle and an actually measured value of the lateral acceleration, it is possible to confirm that the vehicle 1 is turning in the imbalanced turning state, i.e., that the imbalanced turning control by the control device 100 is being executed.

The control device 100 can change the lean angle of the vehicle 1 by controlling the leaning actuator 120 so as to change a leaning drive force that is output by the leaning actuator 120. The control device 100 executes leaning drive force control as necessary during the imbalanced turning control. Specifically, when the magnitude of the lateral acceleration acting on the vehicle 1 changes while the vehicle 1 is turning in the imbalanced turning state, the control device 100 executes the leaning drive force control that changes the magnitude of the leaning drive force according to the lateral acceleration. When the magnitude of the lateral acceleration acting on the vehicle 1 has decreased while the vehicle 1 is turning in the imbalanced turning state, the control device 100 controls the leaning actuator 120 so as to reduce the magnitude of the leaning drive force.

For example, as indicated by the continuous line in the graph of FIG. 1, the leaning drive force according to the lateral acceleration of the vehicle 1 is prepared beforehand as setting information, and the control device 100 executes the leaning drive force control based on the setting information such that the leaning drive force is set to a value according to the lateral acceleration of the vehicle 1. It is possible to confirm that the leaning drive force has been changed during turning of the vehicle 1, i.e., that the leaning drive force control is being executed, based on, for example, a value of a current flowing through the leaning actuator.

The continuous line shown in the graph of FIG. 1 represents an example and is not intended to limit the relationship between the lateral acceleration and the leaning drive force. For example, the relationship between the lateral acceleration and the leaning drive force may be as indicated by the long dashed and short dashed lines in the graph of FIG. 1. The relationship between the lateral acceleration and the leaning drive force can be set as appropriate according to, for example, the characteristics of the vehicle 1.

### Turning Operation of the Vehicle

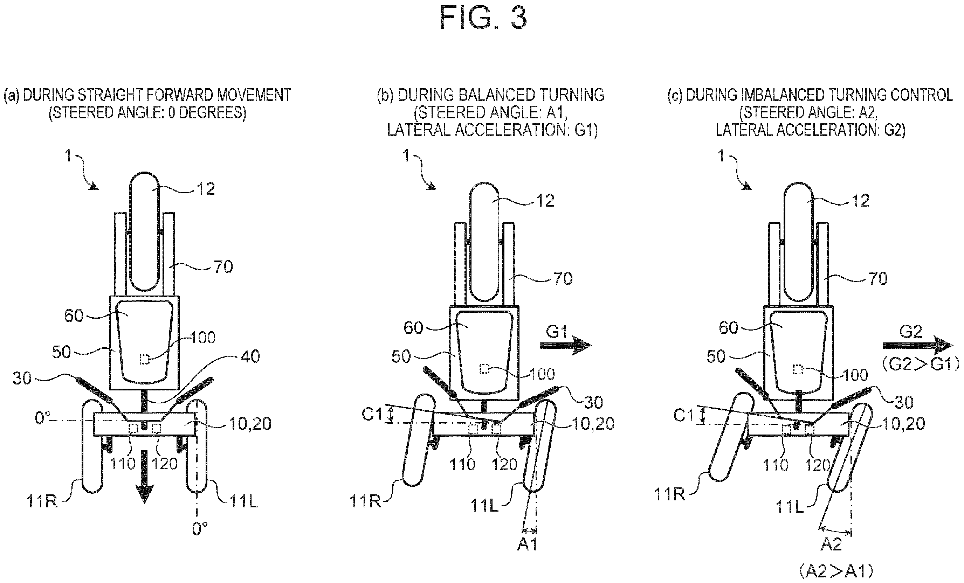

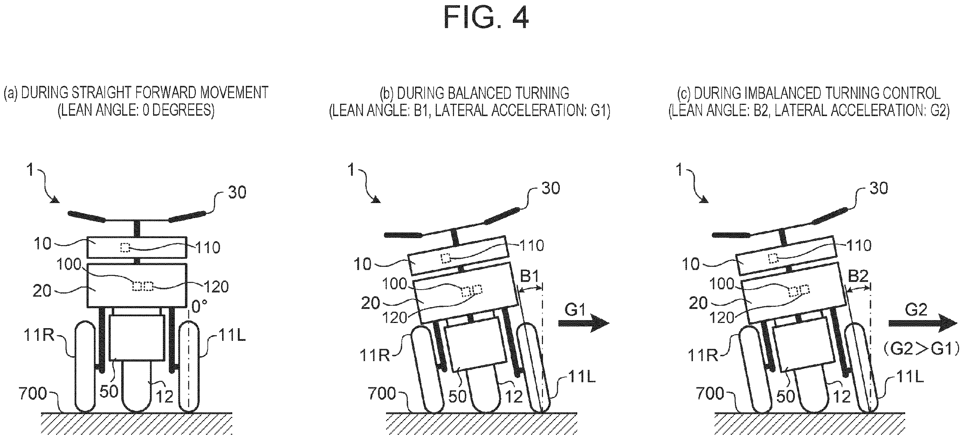

FIG. 3 is a view for describing control of the steered angle by the control device 100. FIGS. 3 (a) to (c) show top views of the vehicle 1 during straight forward movement, balanced turning, and the imbalanced turning control, respectively. FIG. 4 is a view for describing control of the lean angle by the control device 100. FIGS. 4 (a) to (c) show front views of the vehicle 1 during straight forward movement, balanced turning, and the imbalanced turning control, respectively. FIGS. 4 (a) to (c) show front views of the vehicle 1 shown in FIGS. 3 (a) to (c), respectively. "During balanced turning" shows the balanced turning state of the conventional vehicle, and "during imbalanced turning control" shows the imbalanced turning state of the vehicle 1. Hereinafter, the steering actuator 110 may be referred to as a steering mechanism drive unit 110, and the leaning actuator 120 may be referred to as a leaning mechanism drive unit 120.

The vehicle 1 includes the two front wheels 11 (11L, 11R) that are steered wheels, the one rear wheel 12 that is a driven wheel, a frame 40, a prime mover 50, a seat 60, and a power transmission unit 70. The vehicle 1 is a saddle-riding-type vehicle that a rider rides by straddling the seat 60. As the prime mover 50 supported on the frame 40 drives the rear wheel 12 through the power transmission unit 70, the vehicle 1 moves forward while rotating the front wheels 11 and the rear wheel 12 that are in contact with a road surface 700. The type of the prime mover 50 is not particularly limited, and may be an engine that is an internal combustion engine, or may be an electric motor, or may be a hybrid prime mover including an engine and an electric motor. The configuration of the power transmission unit 70 is not limited either, and may be a configuration including a drive chain or may be a configuration including a driveshaft.

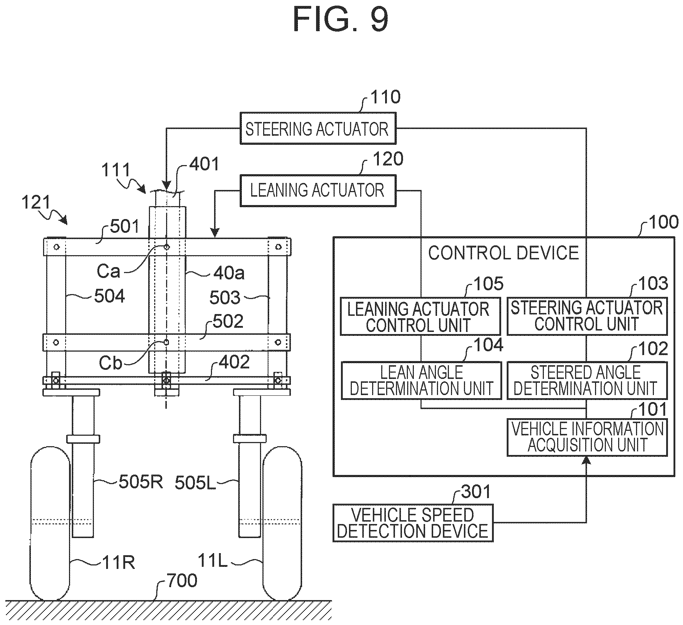

The vehicle 1 includes a handlebar 30, the control device 100, a steering device 10 including a steering mechanism 111 (see FIG. 9) and the steering mechanism drive unit 110, and a leaning device 20 including a leaning mechanism 121 (see FIG. 9) and the leaning mechanism drive unit 120. For example, a leaning actuator formed by an electric motor is used as the leaning mechanism drive unit 120. Similarly, for example, a steering actuator formed by an electric motor is used as the steering mechanism drive unit 110.

When performing a turning operation, the rider operates the handlebar 30 to change the steered angle of the front wheels 11 and the lean angle of the vehicle 1. The handlebar 30 functions as a turning operation input device. The rider can turn the vehicle 1 by performing a turning operation of turning the handlebar 30 to the left or right and thereby changing the directions of the front wheels 11 that are steered wheels to the left or right in an advancing direction and leaning the vehicle 1 toward the center of the turn. The left and right directions mentioned in relation to the vehicle 1 in this embodiment are left and right directions as seen from the rider of the vehicle 1.

The steering mechanism 111 can change the directions of the two front wheels 11 to the same direction. The steering mechanism 111 changes the steered angle of the front wheels 11 according to driving by the steering mechanism drive unit 110. The steering mechanism drive unit 110 is configured to drive the steering mechanism 111 so as to change the directions of the two front wheels 11 to the left direction as well as to the right direction. As shown in FIG. 3, the steered angle A (A1, A2) indicates the directions of the front wheels 11 having been changed to the left or right in the advancing direction, with the directions of the front wheels 11 during straight forward movement as 0 degrees.

The leaning mechanism 121 can change the lean angle of the vehicle 1 so as to lean the vehicle 1 to the left as well as to the right. The leaning mechanism 121 changes the lean angle of the vehicle 1 according to driving by the leaning mechanism drive unit 120. The leaning mechanism drive unit 120 is configured to drive the leaning mechanism 121 so as to increase as well as reduce the lean angle of the vehicle 1. When the vehicle 1 leans, a vehicle body, i.e., the entire vehicle 1 including the front wheels 11 and the rear wheel 12, leans to the same lean angle. Therefore, as shown in FIG. 4, the lean angle B (B 1, B2) can be indicated by the lean of the front wheels 11 toward the left side or the right side, with the angle of the front wheels 11 during straight forward movement as 0 degrees. For example, the lean of the front wheels 11 relative to the road surface 700, with a direction perpendicular to the road surface 700 as 0 degrees, is the lean angle B of the vehicle 1.

The vehicle 1 is a steer-by-wire vehicle in which the handlebar 30 and the front wheels 11 are cut off from each other. When the rider turns the handlebar 30, the control device 100 detects a handlebar angle as an amount of the rider's handlebar operation. As shown in FIG. 3, a handlebar angle C (C1) represents an amount of operation that the rider has turned the handlebar 30, with the direction of the handlebar 30 during straight forward movement as 0 degrees.

The control device 100 can acquire vehicle information showing a state of the vehicle 1. The vehicle information includes the handlebar angle and the vehicle speed. For example, when the rider turns the handlebar 30 to the right and sets the handlebar angle C to 10 degrees while the vehicle is stationary (vehicle speed: zero), upon detecting this, the control device 100 controls the steering device 10 so as to set the steered angle A of the front wheels 11 to 10 degrees. Specifically, as the control device 100 drives the steering mechanism 111 by controlling the steering mechanism drive unit 110, the front wheels 11 turn to the right and the steered angle A is set to 10 degrees.

When the rider starts to turn the vehicle 1 while traveling straight forward, the control device 100 executes the imbalanced turning control of the vehicle 1. Further, the control device 100 executes the leaning drive force control that controls the operation of the leaning mechanism drive unit 120.

The imbalanced turning control is control that makes the vehicle 1 turn in a state (imbalanced turning state) in which the lateral acceleration acting on the center of gravity of the vehicle 1 that is turning is set to a larger lateral acceleration than the lateral acceleration during balanced turning (in the balanced turning state). In the imbalanced turning control, to exert a lateral acceleration on the vehicle 1 that is larger than the lateral acceleration acting on the vehicle 1 in the balanced turning state, the vehicle 1 is turned in a steered-angle-added turning state in which the steered angle is increased compared with the steered angle during balanced turning. As described above, during balanced turning, the lean angle B1 of the vehicle 1 is set to the angle that the resultant force, acting on the center of gravity of the vehicle 1, of the centrifugal force (lateral acceleration G1) directed toward the outer side of the turn and the gravitational force forms with the perpendicular axis. During balanced turning, as shown in FIG. 3 (b), the steered angle of the front wheels 11 of the vehicle 1 that is turning is controlled so as to be the same as the handlebar angle (A = C), as in the case where the vehicle is stationary. The steered angle A1 during balanced turning need not be necessarily equal to the handlebar angle C1, and it is also possible to set the steered angle A1 to be larger or smaller than the handlebar angle.

The setting information in which the lateral acceleration is set according to the vehicle speed is prepared beforehand, and the control device 100 determines the lateral acceleration according to the vehicle speed of the vehicle 1 by referring to the setting information. The control device 100 controls the steering device 10 and the leaning device 20 such that the lateral acceleration acting on the center of gravity of the vehicle 1 that is turning is set to the determined lateral acceleration.

While the imbalanced turning control is executed as shown in FIG. 3 ^{©} and FIG. 4 (c), the leaning drive force control is executed as necessary. The leaning drive force control is control that, in the vehicle 1 that is making an imbalanced turn, changes a drive force with which the leaning mechanism drive unit 120 drives the leaning mechanism 121 according to the magnitude of the lateral acceleration acting on the vehicle 1. For example, when the lateral acceleration acting on the vehicle 1 has changed due to a change in the road surface 700 etc. while the vehicle 1 is turning, the drive force of the leaning mechanism drive unit 120 is changed according to the lateral acceleration acting on the vehicle 1. As shown in FIG. 1, the setting information in which the drive force with which the leaning mechanism drive unit 120 drives the leaning mechanism 121 is set according to the lateral acceleration is prepared beforehand. The control device 100 determines the drive force according to the lateral acceleration by referring to the setting information. The control device 100 controls the leaning mechanism drive unit 120 such that the drive force with which the leaning mechanism drive unit 120 drives the leaning mechanism 121 is set to the determined drive force.

### Imbalanced Turning Control

As shown in FIG. 3 (a) and FIG. 4 (a), during straight forward travel, the handlebar angle, the steered angle, and the lean angle are 0 degrees, and there is no lateral acceleration in the vehicle 1. When the rider operates the handlebar 30 and sets the handlebar angle to C1 as shown in FIG. 3 (b) and FIG. 3 (c), the vehicle 1 turns. During balanced turning, as shown in FIG. 3 (b), the steered angle of the front wheels 11 is set to A1 as the control device 100 controls the steering device 10. The steered angle A1 in this case is equal to the handlebar angle C1 (A1 = C1). As shown in FIG. 4 (b), in response to the ri'er's handlebar operation, the vehicle 1 leans toward the center of the turn and the lean angle is set to B 1. As described above, during balanced turning, the lean angle B1 of the vehicle 1 is set to the angle that the resultant force, acting on the center of gravity of the vehicle 1, of the centrifugal force (lateral acceleration G1) directed toward the outer side of the turn and the gravitational force forms with the perpendicular axis. The steered angle A1 during balanced turning need not be necessarily equal to the handlebar angle C1, and it is also possible to set the steered angle A1 to be larger or smaller than the handlebar angle.

The setting information that the control device 100 uses for the imbalanced turning control is prepared beforehand. The setting information includes data showing correspondence between the vehicle speed and the lateral acceleration. Using the setting information, the control device 100 determines the lateral acceleration to be exerted on the center of gravity of the vehicle 1. Upon detecting that the rider has started to turn the vehicle 1 by operating the handlebar 30, the control device 100 refers to the setting information based on the vehicle speed of the vehicle 1 and determines the lateral acceleration to be exerted on the center of gravity of the vehicle 1.

The control device 100 can perform steering increasing control that sets the steered angle of the front wheels 11 that are turning to a larger angle than the same angle as the handlebar angle. During the imbalanced turning control, the control device 100 drives the steering mechanism 111 by controlling the steering mechanism drive unit 110, and thereby sets the steered angle of the front wheels 11 to the steered angle A2 that is larger than the steered angle A1 during balanced turning (A2 > A1) as shown in FIG. 3 (c). Thus, as shown in FIG. 3 (c), during the imbalanced turning control, the vehicle 1 turns in the steered-angle-added turning state in which the steered angle is increased compared with the steered angle during balanced turning.

During the imbalanced turning control under which the vehicle turns in the steered-angle-added turning state, as shown in FIG. 2 (b), the angle that the vector of the resultant force of the lateral acceleration and the gravitational force acting on the center of gravity of the vehicle 1 forms with the axis perpendicular to the ground surface is set to be larger than the lean angle of the vehicle 1. Therefore, a force that reduces the lean angle acts on the vehicle 1. The control device 100 drives the leaning mechanism 121 by controlling the leaning mechanism drive unit 120 so as to restrict this change. Specifically, the control device 100 can control the leaning mechanism drive unit 120 such that the leaning mechanism 121 maintains the lean angle B1. That is, the control device 100 performs the control such that the lean angle B2 during the imbalanced turning control shown in FIG. 4 (c) is set to the same angle as the lean angle B1 during the balanced turning.

Thus, the control device 100 controls the steering mechanism drive unit 110 such that the steered angle is set to be larger than the steered angle during the balanced turning, and sets the lateral acceleration acting on the center of gravity of the vehicle 1 to the lateral acceleration G2. Further, the control device 100 can restrict a change in the lean angle of the vehicle 1 that occurs due to the steered angle being larger than the steered angle during balanced turning.

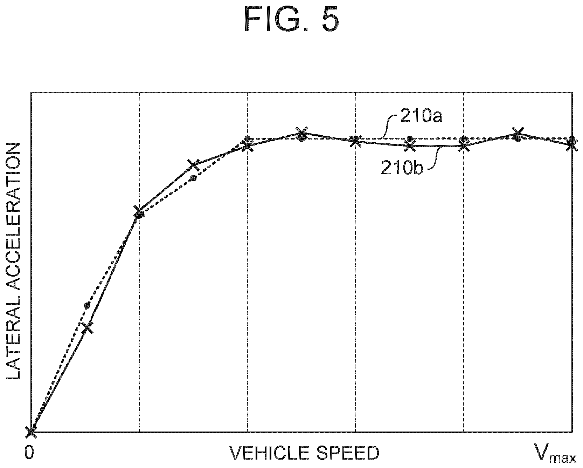

FIG. 5 is a view showing an example of an actually measured value of the lateral acceleration obtained by performing the imbalanced turning control of the leaning vehicle. The control device 100 performs the imbalanced turning control in which a lateral acceleration acts on the vehicle 1 that is larger than the lateral acceleration acting on the vehicle 1 in the balanced turning state. Moreover, the control device 100 controls the steering device 10 and the leaning device 20 such that, when five regions into which a speed region of the vehicle 1 up to a maximum speed is equally divided are defined, a rate of change in a large lateral acceleration in the imbalanced turning state relative to a change in the vehicle speed in a highest speed region becomes lower than a rate of change in a large lateral acceleration in the imbalanced turning state relative to a change in the vehicle speed in a lowest speed region. A mean value of a rate of increase in the lateral acceleration in the highest speed region is smaller than a mean value of a rate of increase in the lateral acceleration in the lowest speed region. A mean value of the lateral acceleration in the lowest speed region is a smaller value than a mean value of the lateral acceleration in the highest speed region. In this embodiment, the lateral acceleration in the imbalanced turning state is controlled so as to assume a constant value as the vehicle speed of the vehicle 1 approaches a maximum speed Vmax.

Data 210a indicated by the broken line in FIG. 5 represents the lateral acceleration that the control device 100 exerts on the center of gravity of the vehicle 1 by performing the imbalanced turning control. Data 210b indicated by the continuous line in FIG. 5 represents an example of an actually measured value of the lateral acceleration that acts on the center of gravity of the vehicle 1 during the imbalanced turning control by the control device 100. The actually measured value of the lateral acceleration varies depending on various factors such as the weight of the rider, the conditions of the road surface, the wind direction, the wind speed, the equipment of the vehicle 1, and the setting conditions of the vehicle 1. Therefore, as shown in FIG. 5, the data 210a on the lateral acceleration that is set beforehand and the data 210b that is the actually measured lateral acceleration do not always match. The imbalanced turning control by the control device 100 as termed in this embodiment is not limited to control under which the value of the lateral acceleration actually measured in the vehicle 1 matches the lateral acceleration in the data 210a that is set beforehand. The imbalanced turning control by the control device 100 includes control under which, as indicated by the data 210b, the actually measured value of the lateral acceleration of the vehicle 1 indicates a different value from the data 210a that is set in the setting information.

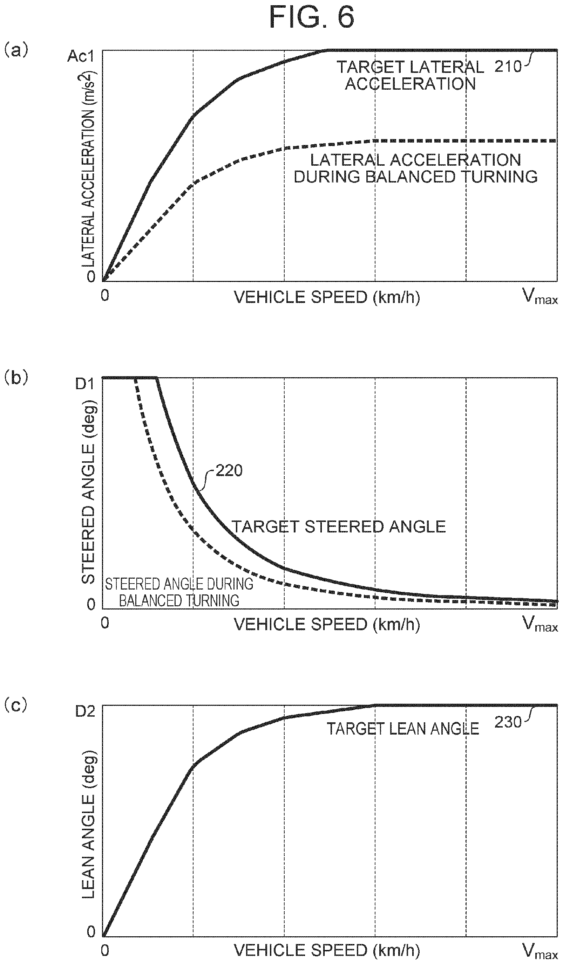

In the following, to simplify the description, the lateral acceleration that the control device 100 exerts on the center of gravity of the vehicle 1 by performing the imbalanced turning control will be referred to as a target lateral acceleration, and the steered angle and the lean angle of the vehicle 1 for producing the target lateral acceleration will be referred to as a target steered angle and a target lean angle, respectively, in continuing the description. FIG. 6 is a view for describing a method of determining the steered angle and the lean angle for setting the lateral acceleration acting on the center of gravity of the vehicle 1 to the target lateral acceleration. Vmax on the axis of abscissa in FIGS. 6 (a) to (c) represents the maximum speed of the vehicle 1. The maximum speed Vmax of the vehicle 1 as termed in this embodiment is set to the same as the actual maximum speed of the vehicle 1 or to a higher speed than the actual maximum speed. For example, the maximum speed may be a design value, or may be an actually measured value of the maximum speed of the vehicle 1, or may be a value that is set based on the design value or the actually measured value.

Data 210 of the continuous line shown in FIG. 6 (a) is data representing the target lateral acceleration. The target lateral acceleration according to the vehicle speed is set beforehand for the lateral acceleration 0 to Ac1. Data 220 of the continuous line shown in FIG. 6 (b) represents the target steered angle. The target steered angle according to the vehicle speed is set beforehand for the steered angle 0 to D1. The continuous line in FIG. 6 (c) represents the target lean angle. The target lean angle according to the vehicle speed is set beforehand for the lean angle 0 to D2.

The broken line in FIG. 6 (a) represents the lateral acceleration during balanced turning. The target lateral acceleration represented by the data 220 of the continuous line is set such that a difference from the lateral acceleration during balanced turning in low vehicle speed regions becomes smaller than a difference from the lateral acceleration during balanced turning in high vehicle speed regions. The broken line in FIG. 6 (b) represents the steered angle during balanced turning. The target steered angle represented by the data 220 of the continuous line has the same value as the steered angle during balanced turning in part of a speed region from a 0 (zero) vehicle speed to a predetermined speed, and is larger than the steered angle during balanced turning in the other speed regions, with the difference from the target steered angle becoming smaller as the vehicle speed becomes higher. While the lean angle during balanced turning is not shown in FIG. 6 (c), when the control device 100 performs the imbalanced turning control that maintains the lean angle during balanced turning, the target lean angle shown in FIG. 6 (c) matches the lean angle during balanced turning.

When the vehicle speed is high, the vehicle 1 turns with the steered angle of the front wheels 11 reduced and the lean angle increased compared with when the vehicle speed is low. In other words, when the vehicle speed is low, the vehicle 1 turns with the steered angle of the front wheels 11 increased and the lean angle reduced compared with when the vehicle speed is high. Therefore, as the vehicle speed becomes higher, the target steered angle becomes smaller and the target lean angle becomes larger.

FIG. 6 (a) is a view showing an example of the setting information for the control device 100 to determine the lateral acceleration during the imbalanced turning control. The control device 100 controls the steering device 10 and the leaning device 20 such that the target lateral acceleration acts on the center of gravity of the vehicle 1 that is turning. For example, the control device 100 may acquire the lateral acceleration of the vehicle 1 and control the steering device 10 and the leaning device 20 such that the lateral acceleration is set to the target lateral acceleration. As a result, the steered angle of the vehicle 1 is set to the target steered angle, and the lean angle is set to the target lean angle. The method of acquiring the lateral acceleration that is an acceleration of the vehicle 1 in the left or right direction is conventionally known and therefore details will be omitted. For example, the lateral acceleration acting on the center of gravity of the vehicle 1 can be acquired using a capacitance sensor, a piezoresistive sensor, a piezoelectric sensor, an inertial measurement unit (IMU), etc.

The setting information that the control device 100 uses may include the data 220 shown in FIG. 6 (b) and data 230 shown in FIG. 6 (c) instead of or in addition to the data 210 shown in FIG. 6 (a). In this case, the control device 100 can determine the target steered angle and the target lean angle by referring to the data 220, 230 based on the vehicle speed of the vehicle 1. As the control device 100 controls the steering device 10 so as to set the steered angle of the front wheels 11 to the target steered angle and controls the leaning device 20 so as to set the lean angle of the vehicle 1 to the target lean angle, the lateral acceleration acting on the center of gravity of the vehicle 1 can be set to the target lateral acceleration corresponding to the vehicle speed.

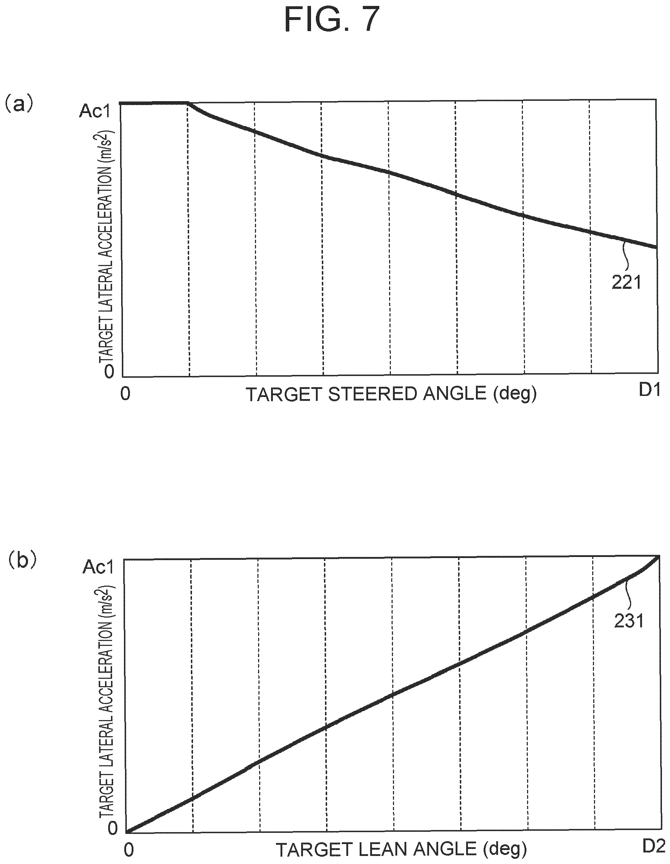

FIG. 7 is a view for describing another method of determining the steered angle and the lean angle for setting the lateral acceleration acting on the center of gravity of the vehicle 1 to the target lateral acceleration. Data 221 on the target steered angle and data 231 on the target lean angle shown in FIG. 7 are data that are obtained from the data 210, 220, and 230 shown in FIG. 6. The target lateral acceleration Ac1 and the target steered angle D1 shown in FIG. 7 (a) correspond to the lateral acceleration Ac1 shown in FIG. 6 (a) and the steered angle D1 shown in FIG. 6 (b), respectively. The target lateral acceleration Ac1 and the target lean angle D2 shown in FIG. 7 (b) correspond to the lateral acceleration Ac1 shown in FIG. 6 (a) and the lean angle D2 shown in FIG. 6 (c), respectively.

The data 221 in FIG. 7 (a) shows correspondence between the target steered angle and the target lateral acceleration. As the target lateral acceleration becomes smaller, the target steered angle becomes larger. In other words, as the target lateral acceleration becomes larger, the target steered angle becomes smaller. The data 231 in FIG. 7 (b) shows correspondence between the target lean angle and the target lateral acceleration. As the target lateral acceleration becomes larger, the target lean angle becomes larger. In other words, as the target lateral acceleration becomes smaller, the target steered angle becomes smaller.

The setting information that the control device 100 uses may include the data 210 shown in FIG. 6 (a), the data 221 shown in FIG. 7 (a), and the data 231 shown in FIG. 7 (b). In this case, upon determining the target lateral acceleration by referring to the data 210 in FIG. 6 (a) based on the vehicle speed of the vehicle 1, the control device 100 can determine, based on the target lateral acceleration, the target steered angle from the data 221 in FIG. 7 (a) and the target lean angle from the data 231 in FIG. 7 (b). As the control device 100 controls the steering device 10 and the leaning device 20 so as to set the steered angle and the lean angle of the vehicle 1 to the target steered angle and the target lean angle, respectively, the lateral acceleration acting on the center of gravity of the vehicle 1 can be set to the target lateral acceleration.

### Specific Example of the Leaning Vehicle

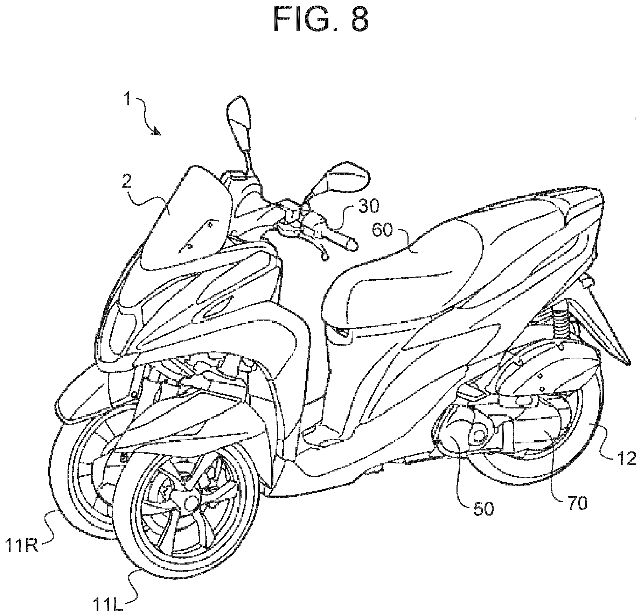

Next, the imbalanced turning control performed in the vehicle 1 will be described using a specific example. FIG. 8 is a view showing a specific example of the vehicle 1. The vehicle 1 shown in FIG. 8 has, on an inside of the vehicle body that is covered by a cowl 2 forming an external appearance of the vehicle 1, the steering device 10 including the steering mechanism 111 and the steering mechanism drive unit 110, the leaning device 20 including the leaning mechanism 121 and the leaning mechanism drive unit 120, and the control device 100. Other than the components shown in FIG. 1, the vehicle 1 includes many parts as components, including an accelerator and a brake. However, as such a vehicle 1 is conventionally known, detailed description thereof will be omitted.

FIG. 9 is a view for describing specific examples of the steering device 10, the leaning device 20, and the control device 100. In the example shown in FIG. 9, the steering mechanism 111 is driven by the steering actuator 110 that functions as the steering mechanism drive unit, and the leaning mechanism 121 is driven by the leaning actuator 120 that functions as the leaning mechanism drive unit.

The control device 100 includes a vehicle information acquisition unit 101, a steered angle determination unit 102, a steering actuator control unit 103, a lean angle determination unit 104, and a leaning actuator control unit 105. In the vehicle 1, a vehicle speed detection device 301 that detects the vehicle speed is provided, and the vehicle information acquisition unit 101 acquires the vehicle speed from the vehicle speed detection device 301. The vehicle speed detection device 301 is conventionally known and therefore description thereof will be omitted. For example, the vehicle speed is detected based on a rotation speed of the wheels 11, 12 that is acquired using a rotation sensor, and an outside diameter of the wheels 11, 12.

The leaning mechanism 121 shown in FIG. 9 is a parallelogram-link-type leaning mechanism. The leaning mechanism 121 includes an upper arm 501, a lower arm 502, a left member 503, a right member 504, a left suspension 505L, and a right suspension 505R.

The upper arm 501 and the lower arm 502 are rotatably connected to a head pipe 40a at a front end of the frame 40. The left member 503 is rotatably connected to left end portions of the upper arm 501 and the lower arm 502. At a lower end portion of the left member 503, the left suspension 505L is connected through a bracket. The left front wheel 11L that is a steered wheel is rotatably connected to the left suspension 505L. The left suspension 505L allows the left front wheel 11L to move up and down relative to the left member 503. The right member 504 is rotatably connected to right end portions of the upper arm 501 and the lower arm 502. At a lower end portion of the right member 504, the right suspension 505R is connected through a bracket. The right front wheel 11R that is a steered wheel is rotatably connected to the right suspension 505R. The right suspension 505R allows the right front wheel 11R to move up and down relative to the right member 504.

When the upper arm 501 and the lower arm 502 rotate around central axes Ca, Cb, respectively, on the head pipe 40a, relative positions of the left front wheel 11L and the right front wheel 11R in a vehicle body up-down direction relative to the frame 40 change, so that the left front wheel 11L and the right front wheel 11R lean at the same time to the same angle.

Specifically, when turning the vehicle 1 in the left direction, the leaning actuator 120 rotates the upper arm 501 and the lower arm 502 around the central axes Ca, Cb, respectively, in a clockwise direction in FIG. 9, so that the left front wheel 11L and the right front wheel 11R lean in the left direction. When turning the vehicle 1 in the right direction, the leaning actuator 120 rotates the upper arm 501 and the lower arm 502 around the central axes Ca, Cb, respectively, in a counterclockwise direction in FIG. 9, so that the left front wheel 11L and the right front wheel 11R lean in the right direction.

For example, an electric motor fixed on the frame 40 is used as the leaning actuator 120. As the leaning actuator control unit 105 controls a rotation direction and a rotation angle of an output shaft of the electric motor connected to the upper arm 501 or the lower arm 502, the lean angle of the vehicle 1 can be controlled to a lean angle determined by the lean angle determination unit 104. Control of the leaning actuator 120 is performed, for example, by controlling an output torque (leaning torque) of the leaning actuator 120.

The steering mechanism 111 includes a steering shaft 401 and a tie rod 402. The steering shaft 401 is inserted into the head pipe 40a and can rotate relative to the head pipe 40a. A central portion of the tie rod 402 is connected to a lower end portion of the steering shaft 401. The tie rod 402 moves in the left and right directions as the steering shaft 401 rotates.

A left end portion of the tie rod 402 is connected to the left suspension 505L that supports the left front wheel 11L. A right end portion of the tie rod 402 is connected to the right suspension 505R that supports the right front wheel 11R. When the tie rod 402 moves in the left or right direction, the left front wheel 11L and the right front wheel 11R change their directions to the left or right.

The steering shaft 401 is not mechanically connected to the handlebar 30. When the rider turns the handlebar 30, the steering actuator control unit 103 controls the steering actuator 110 so as to rotate the steering shaft 401. When turning the vehicle 1 in the left direction, the steering actuator 110 rotates the steering shaft 401 such that the right front wheel 11R and the left front wheel 11L face the left direction. When turning the vehicle 1 in the right direction, the steering actuator 110 rotates the steering shaft 401 such that the left front wheel 11L and the right front wheel 11R face the right direction.

For example, an electric motor fixed on the frame 40 is used as the steering actuator 110. As the steering actuator control unit 103 controls a rotation direction and a rotation angle of an output shaft of the electric motor connected to the steering shaft 401, the steered angle of the front wheels 11 can be controlled to a steered angle determined by the steered angle determination unit 102. Control of the steering actuator 110 is performed, for example, by controlling an output torque (steering torque) of the steering actuator 110.

When the rider turns the handlebar 30 to start a turning operation, the imbalanced turning control of the vehicle 1 is started. The vehicle information acquisition unit 101 acquires the vehicle speed of the vehicle 1 from the vehicle speed detection device 301. The steered angle determination unit 102 determines the target lateral acceleration based on the vehicle speed acquired by the vehicle information acquisition unit 101, and determines the target steered angle corresponding to the target lateral acceleration. The steering actuator control unit 103 controls the steering actuator 110, which drives the steering mechanism 111, such that the steered angle of the front wheels 11 is set to the target steered angle determined by the steered angle determination unit 102.

The lean angle determination unit 104 determines the target lateral acceleration based on the vehicle speed acquired by the vehicle information acquisition unit 101, and determines the target lean angle corresponding to the target lateral acceleration. The leaning actuator control unit 105 controls the leaning actuator 120, which drives the leaning mechanism 121, such that the lean angle of the vehicle 1 is set to the target lean angle determined by the lean angle determination unit 104. For example, when the steered angle of the vehicle 1 having leaned under the imbalanced turning control is controlled to a larger angle than the steered angle during balanced turning, a force that tries to raise the vehicle 1 toward an outer side of the turn, i.e., a force that tries to reduce the lean angle, acts on the vehicle 1. The leaning actuator control unit 105 controls the leaning actuator 120 such that the vehicle 1 in the leaned state does not rise toward the outer side of the turn, i.e., that the lean angle does not decrease.

As a result, as described above, in a state where the steered angle of the front wheels 11 is set to the target steered angle larger than the steered angle during balanced turning and the lean angle of the vehicle 1 is maintained at the target lean angle, the lateral acceleration acting on the center of gravity of the vehicle 1 is set to the target lateral acceleration and the vehicle 1 turns.

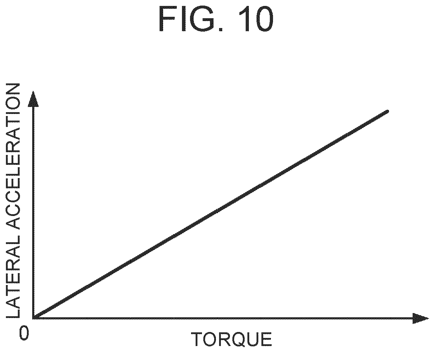

FIG. 10 is a view for describing the operation of the leaning actuator 120 that drives the leaning mechanism 121. The leaning actuator 120 is configured to change the lean angle of the vehicle 1 by applying a torque to the leaning mechanism 121. For example, the lean angle of the vehicle 1 is changed by controlling the rotation direction and the output torque of the output shaft of the electric motor that functions as the leaning actuator 120. A value of the output torque of the output shaft is a value having a proportional relationship with a value of a current applied to the electric motor.

When the vehicle speed of the vehicle 1 is high, the lateral acceleration acting on the center of gravity of the vehicle 1 having started to turn is large compared with when the vehicle speed is low. Further, when the vehicle speed of the vehicle 1 is high, a force that results from increasing the steered angle during turning and that tries to raise the vehicle 1, i.e., that tries to reduce the lean angle, also becomes large compared with when the vehicle speed is low, so that the torque of the leaning actuator 120 for restricting this force needs to be increased. Therefore, as shown in FIG. 10, the control device 100 controls the leaning actuator 120 such that the torque becomes larger as the lateral acceleration acting on the center of gravity of the vehicle 1 becomes larger. While FIG. 10 shows an example in which the relationship between the lateral acceleration and the torque changes linearly, this represents an example and it is not intended that the relationship between the lateral acceleration and the torque is limited thereto.

A lateral acceleration determination unit may be provided between the vehicle information acquisition unit 101 shown in FIG. 9 on one side and the steered angle determination unit 102 and the lean angle determination unit 104 on the other side. In this case, the lateral acceleration determination unit may determine the target lateral acceleration according to the vehicle speed, and based on the target lateral acceleration, the steered angle determination unit 102 may determine the target steered angle and the lean angle determination unit 104 may determine the target lean angle.

A timing when the leaning actuator control unit 105 starts to control the leaning actuator 120 to achieve the target lean angle may be before a timing when the steering actuator control unit 103 starts to control the steering actuator 110 to achieve the target steered angle. A control gain when the leaning actuator control unit 105 controls the leaning actuator 120 may be set to be larger than a control gain when the steering actuator control unit 103 controls the steering actuator 110. In other words, an aspect may be adopted in which the control timings and the control gains are set such that, when an action of returning the lean angle to 0 degrees of straight forward movement and an action of returning the steered angle to 0 degrees of straight forward movement, after completion of turning of the vehicle 1, are compared, the action of returning the lean angle to 0 degrees ends first.

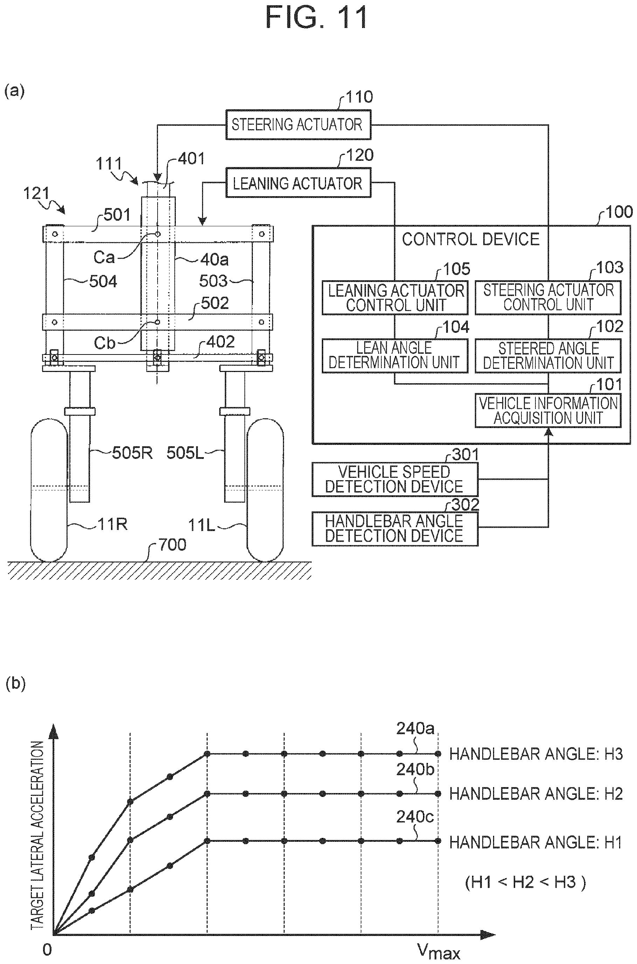

An aspect may be adopted in which the control device 100 controls the steered angle and the lean angle of the front wheels 11 based on the vehicle speed and the handlebar angle. FIG. 11 is a view for describing an example of the imbalanced turning control that is performed using the vehicle speed and the handlebar angle. The vehicle information acquisition unit 101 shown in FIG. 11 (a) acquires the vehicle speed from the vehicle speed detection device 301, and acquires the handlebar angle from a handlebar angle detection device 302. The handlebar angle detection device 302 is conventionally known and therefore description thereof will be omitted. For example, the handlebar angle is detected using an angle sensor, an encoder, etc.

FIG. 11 (b) is a view showing an example of setting information that is used when performing the imbalanced turning control based on the vehicle speed and the handlebar angle. A plurality of pieces of data 240 (240a to 240c) different in the target lateral acceleration according to the handlebar angle are prepared beforehand. While FIG. 11 (b) shows an example of the three pieces of data 240a to 240c, the data 240 on the target lateral acceleration is prepared for each handlebar angle.

The larger the handlebar angle is, the larger the value is to which the target lateral acceleration is set. When the handlebar angle becomes larger in order of H1, H2, H3 (H1 < H2 < H3), as shown in FIG. 11 (b), the data 240a on the target lateral acceleration for the handlebar angle H3 is set to a larger value than the data 40b on the target lateral acceleration for the handlebar angle H2 in all the speed regions up to the maximum speed Vmax. Similarly, the data 240b on the target lateral acceleration for the handlebar angle H2 is set to a larger value than the data 240c on the target lateral acceleration for the handlebar angle H1.

For example, as shown in FIG. 11 (b), the target lateral acceleration in each data 240 is set such that, when five regions into which the speed region of the vehicle 1 from the 0 (zero) vehicle speed to the maximum speed Vmax is equally divided are defined, a rate of change in the target lateral acceleration relative to a change in the vehicle speed in the highest speed region becomes lower than a rate of change in the target lateral acceleration relative to a change in the vehicle speed in the lowest speed region. A mean value of a rate of increase in the lateral acceleration in the highest speed region is smaller than a mean value of a rate of increase in the lateral acceleration in the lowest speed region. Further, each data 240 is set such that a mean value of the target lateral acceleration in the lowest speed region becomes smaller than a mean value of the target lateral acceleration in the highest speed region. Each data 240 is set such that the lateral acceleration increases gradually in low vehicle speed regions including the lowest speed region and that the lateral acceleration assumes a constant value in high vehicle speed regions including the highest speed region. Each data 240 is set such that the target lateral acceleration becomes larger as the handlebar angle becomes larger.

When the rider turns the handlebar 30 to start a turning operation, the imbalanced turning control of the vehicle 1 is started. The vehicle information acquisition unit 101 acquires the vehicle speed of the vehicle 1 from the vehicle speed detection device 301 and acquires the handlebar angle from the handlebar angle detection device 302. The steered angle determination unit 102 selects, from the plurality of pieces of data 240, the data 240 corresponding to the handlebar angle acquired by the vehicle information acquisition unit 101. By referring to the selected data 240, the steered angle determination unit 102 determines the target lateral acceleration based on the vehicle speed acquired by the vehicle information acquisition unit 101, and determines the target steered angle corresponding to the target lateral acceleration. The steering actuator control unit 103 controls the steering actuator 110 such that the steered angle of the front wheels 11 is set to the target steered angle.

Similarly, the lean angle determination unit 104 selects, from the plurality of pieces of data 240, the data 240 corresponding to the handlebar angle acquired by the vehicle information acquisition unit 101. By referring to the selected data 240, the lean angle determination unit 104 determines the target lateral acceleration based on the vehicle speed acquired by the vehicle information acquisition unit 101, and determines the target lean angle corresponding to the target lateral acceleration. The leaning actuator control unit 105 controls the steering actuator 110 such that the lean angle of the vehicle 1 is set to the target lean angle.

As a result, as described above, in the state where the steered angle of the front wheels 11 is set to the target steered angle larger than the steered angle during balanced turning, and the lean angle of the vehicle 1 is maintained at the target lean angle, the lateral acceleration acting on the center of gravity of the vehicle 1 is set to the target lateral acceleration and the vehicle 1 turns.

A lateral acceleration determination unit may be provided between the vehicle information acquisition unit 101 on one side and the steered angle determination unit 102 and the lean angle determination unit 104 on the other side. In this case, the lateral acceleration determination unit may select the data 240 according to the handlebar angle, and may determine the target lateral acceleration according to the vehicle speed in the data 240. Then, based on the target lateral acceleration, the steered angle determination unit 102 may determine the target steered angle and the lean angle determination unit 104 may determine the target lean angle.

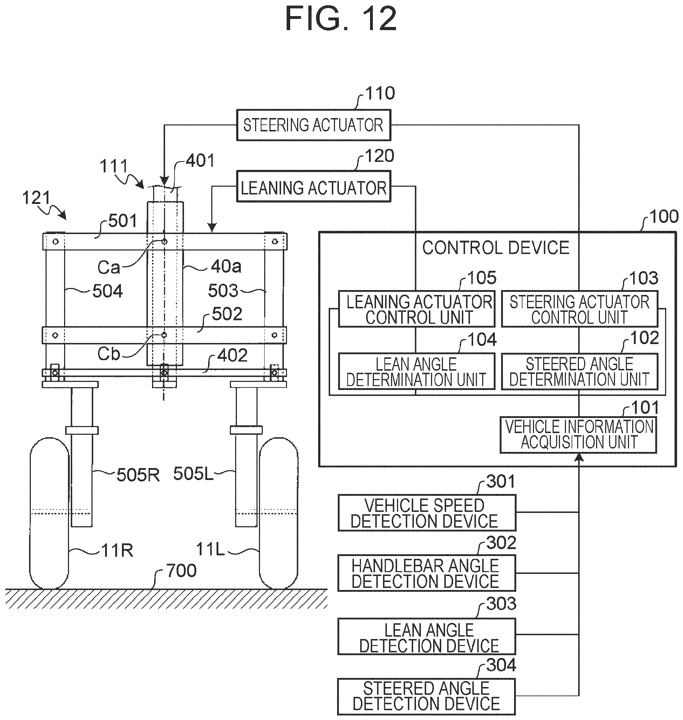

An aspect may be adopted in which the control device 100 performs feedback control that controls the steered angle and the lean angle of the vehicle 1 while detecting the steered angle and the lean angle. FIG. 12 is a view for describing an example of the imbalanced turning control that is performed using the feedback control. The vehicle information acquisition unit 101 shown in FIG. 12 acquires the vehicle speed from the vehicle speed detection device 301, and acquires the handlebar angle from the handlebar angle detection device 302. Further, the vehicle information acquisition unit 101 acquires the lean angle of the vehicle 1 from a lean angle detection device 303, and acquires the steered angle of the front wheels 11 from a steered angle detection device 304. The steered angle detection device 304 is conventionally known and therefore description thereof will be omitted. For example, the steered angle is detected using an angle sensor, an encoder, etc. The lean angle detection device 303 is conventionally known and therefore description thereof will be omitted. For example, the lean angle of the vehicle 1 is detected using an angle sensor, a gyroscope sensor, an encoder, an IMU, etc.

Based on the vehicle information acquired by the vehicle information acquisition unit 101, as described in FIG. 9 and FIG. 11, the target steered angle is determined by the steered angle determination unit 102 and the target lean angle is determined by the lean angle determination unit 104.

When the target steered angle is determined, the steering actuator control unit 103 starts to control the steering actuator 110 that drives the steering mechanism 111. The steering actuator control unit 103 can acquire, through the vehicle information acquisition unit 101, the steered angle of the front wheels 11 detected by the steered angle detection device 304. While checking the steered angle of the front wheels 11, the steering actuator control unit 103 controls the steering actuator 110 such that the steered angle is set to the target steered angle.

When the target lean angle is determined, the leaning actuator control unit 105 starts to control the leaning actuator 120 that derives the leaning mechanism 121. The leaning actuator control unit 105 can acquire, through the vehicle information acquisition unit 101, the lean angle of the vehicle 1 detected by the lean angle detection device 303. While checking the lean angle of the vehicle 1, the leaning actuator control unit 105 controls the leaning actuator 120 such that the lean angle is set to the target lean angle.

As a result, as described above, in the state where the steered angle of the front wheels 11 is set to the target steered angle larger than the steered angle during balanced turning, and the lean angle of the vehicle 1 is maintained at the target lean angle, the lateral acceleration acting on the center of gravity of the vehicle 1 is set to the target lateral acceleration and the vehicle 1 turns.

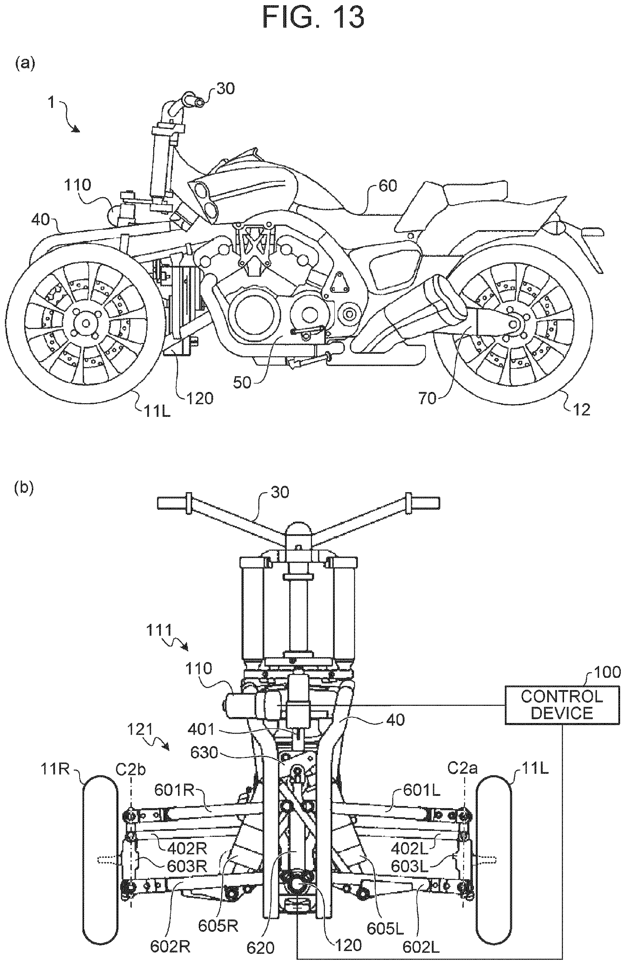

Next, another example of the vehicle 1 will be described. FIG. 13 is a view showing another specific example of the vehicle 1. The vehicle 1 has, on the frame 40 located frontward of the handlebar 30 as shown in FIG. 13 (a), a double-wishbone-type leaning mechanism 121 as shown in FIG. 13 (b). The structure and operation of the vehicle 1 shown in FIG. 13 are disclosed in, for example, International Publication No. WO 2017/082426 by the present applicant.

As shown in FIG. 13 (b), the leaning mechanism 121 includes an upper left arm 601L, a lower left arm 602L, an upper right arm 601R, and a lower right arm 602R. Right end portions of the upper left arm 601L and the lower left arm 602L are rotatably connected to the frame 40, and left end portions thereof are rotatably connected to an upper end portion and a lower end portion of a left member 603L. Left end portions of the upper right arm 601R and the lower right arm 602R are rotatably connected to the frame 40, and right end portions thereof are rotatably connected to an upper end portion and a lower end portion of a right member 603R. The left front wheel 11L is rotatably connected to the left member 603L, and the right front wheel 11R is rotatably connected to the right member 603R. Thus, the left front wheel 11L and the right front wheel 11R can move up and down relative to the frame 40.

A lower end portion of a left damper 605L is rotatably connected to a crossbar that forms the lower left arm 602L, and a lower end portion of a right damper 605R is rotatably connected to a crossbar that forms the lower right arm 602R. An upper end portion of the left damper 605L is rotatably connected to a left end portion of a coupling part 630, and an upper end portion of the right damper 605R is rotatably connected to a right end portion of the coupling part 630, and an upper end portion of a center arm 620 is rotatably connected to a central portion of the coupling part 630. A lower end portion of the center arm 620 is rotatably connected to the frame 40. As the coupling part 630 swings to the left and right around a portion connected to the center arm 620 as the center, upward motion of the left front wheel 11L is transmitted as downward motion of the right front wheel 11R, and upward motion of the right front wheel 11R is transmitted as downward motion of the left front wheel 11L. As the left front wheel 11L moves upward and the right front wheel 11R moves downward, the front wheels 11 and the vehicle 1 lean to the left, and as the right front wheel 11R moves upward and the left front wheel 11L moves downward, the front wheels 11 and the vehicle 1 lean to the right.

As the leaning actuator 120 fixed on the frame 40 drives the center arm 620, the center arm 620 swings around its lower end portion as the center. When the center arm 620 swings, the relative positions of the left front wheel 11L and the right front wheel 11R in the vehicle body up-down direction relative to the frame 40 change through the coupling part 630. The control device 100 can control the lean angle of the vehicle 1 by controlling a rotation direction and a rotation angle of the center arm 620 through the leaning actuator 120.

The steering mechanism 111 of the vehicle 1 shown in FIG. 13 (b) includes the steering shaft 401, a left tie rod 402L, and a right tie rod 402R. The steering shaft 401 and the left member 603L that supports the left front wheel 11L are connected to each other by the left tie rod 402L. The steering shaft 401 and the right member 603R that supports the right front wheel 11R are connected to each other by the right tie rod 402R. When the rider turns the handlebar 30, the control device 100 controls the steering actuator 110 so as to move the left tie rod 402L and the right tie rod 402R through the steering shaft 401, so that the left front wheel 11L rotates around an axis C2a shown in FIG. 13 (b) and the right front wheel 11R rotates around an axis C2b. The control device 100 can control the steered angle of the front wheels 11 by controlling movement directions and amounts of movement of the left tie rod 402L and the right tie rod 402R through the steering actuator 110.

Also in the vehicle 1 shown in FIG. 13, the control device 100 can perform the imbalanced turning control of the vehicle 1 as described above by controlling the steering actuator 110 and the leaning actuator 120.

### Leaning Drive Force Control

Next, the leaning drive force control will be described. As described above, the control device 100 executes the imbalanced turning control of controlling the steered angle and the lean angle of the vehicle 1 that is turning. Further, the control device 100 executes the leaning drive force control in which the leaning actuator 120 functioning as the leaning mechanism drive unit changes the drive force for driving the leaning mechanism 121 based on the lateral acceleration acting on the vehicle 1.

For example, when an electric motor fixed on the frame 40 is used as the leaning actuator 120, an output torque of the electric motor that is the drive force for driving the leaning mechanism 121 is controlled based on the magnitude of the lateral acceleration acting on the vehicle 1 in the imbalanced turning state.

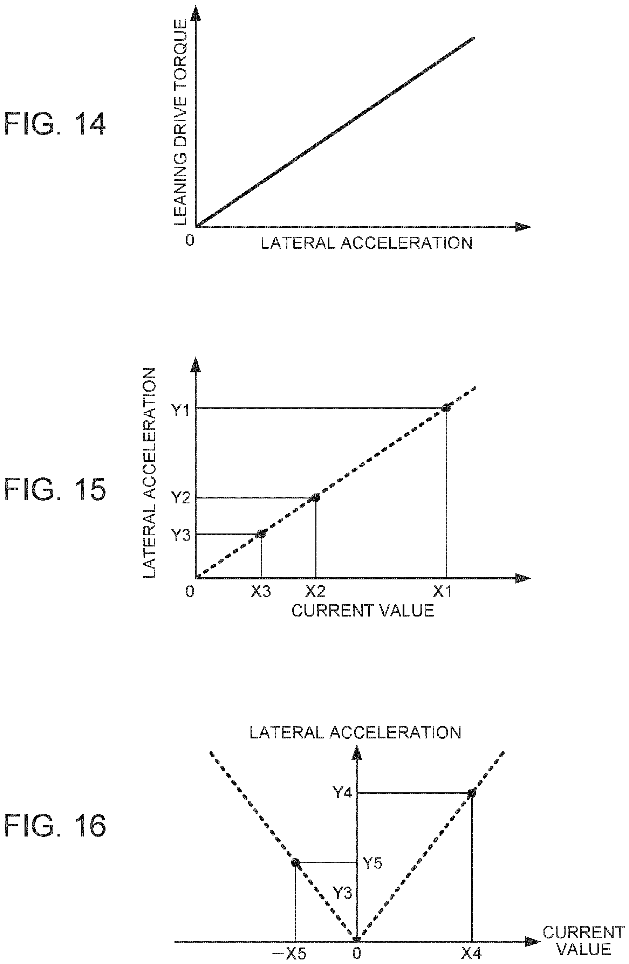

In the vehicle 1 that is turning at the target lean angle while the imbalanced turning control is performed, a value of the output torque of the leaning actuator 120 is a value for bringing the lean angle of the vehicle 1 close to the target lean angle. FIG. 14 is a view showing correspondence between the value of the lateral acceleration and the value of the torque for bringing the lean angle of the vehicle 1 close to the target lean angle. The torque, i.e., the leaning drive torque shown on the axis of ordinate of FIG. 14, corresponds to the leaning drive force shown in FIG. 1. The control device 100 detects the lateral acceleration of the vehicle 1 through the vehicle information acquisition unit 101, and determines the value of the torque according to the detected lateral acceleration from the correspondence relationship shown in FIG. 14. The control device 100 controls the leaning actuator 120 such that the value of the output torque of the leaning actuator 120 is set to the value of the output torque determined based on the lateral acceleration acting on the vehicle 1 in the imbalanced turning state.

For example, when the leaning actuator 120 is an electric motor, the value of the output torque of the output shaft has a proportional relationship with a value of a current flowing through the electric motor. Therefore, the control of the output torque of the leaning actuator 120 is performed by controlling the value of the current flowing through the leaning actuator 120.

FIG. 15 is a view for describing a specific example of the leaning drive force control by the current value. As shown in FIG. 15, when the target lateral acceleration of the vehicle 1 that has started to turn in the imbalanced turning state is a value Y1, and the value of the current applied to the leaning actuator 120 to produce the target lateral acceleration Y1 is a value X1, the control device 100 executes the imbalanced turning control in which the current value of the leaning actuator 120 is set to the value X1. The leaning actuator 120 generates a torque according to the current value X1 and thereby holds the lean angle of the vehicle 1 at the target lean angle. As described above, in the imbalanced turning state, a force that tries to raise the vehicle body toward the outer side of the turn works in the vehicle 1. The leaning actuator 120 exerts a torque directed toward an inner side of the turn on the leaning mechanism 121 such that the vehicle 1 in the leaned state does not rise toward the outer side of the turn.

When the lateral acceleration acting on the vehicle 1 has decreased from the value Y1 to a value Y2 during turning due to, for example, a change in the road surface conditions, the control device 100 changes the value of the current applied to the leaning actuator 120 from the value X1 to a value X2 from the correspondence relationship shown in FIG. 15. The leaning actuator 120 generates a torque according to the current value X2. When the lateral acceleration acting on the vehicle 1 decreases further to a value Y3, the control device 100 changes the value of the current applied to the leaning actuator 120 to a value X3, and the leaning actuator 120 generates a torque according to the current value X3. When the value of the lateral acceleration has increased, the control device 100 increases the value of the current applied to the leaning actuator 120. For example, when the lateral acceleration has increased from the value Y2 to the value Y1, the control device 100 changes the value of the current applied to the leaning actuator 120 from the value X2 to the value X1, and the leaning actuator 120 generates a torque according to the current value X1.

While the example in which the current value decreases to a predetermined value has been shown in FIG. 15, there is also a case where, when the lateral acceleration acting on the vehicle 1 has decreased, the control device 100 sets the value of the current applied to the leaning actuator 120 to 0 (zero), i.e., a case where the torque generated by the leaning actuator 120 is set to 0 (zero).

In FIG. 15, the example has been shown in which the value of the torque generated by the leaning actuator 120 is changed according to the change in the lateral acceleration while the state where the leaning actuator 120 is exerting a torque directed toward the inner side of the turn on the leaning mechanism 121 is maintained such that the vehicle 1 that is turning in the leaned state does not rise toward the outer side of the turn. Other than this example, there is also a case where control is performed that sets the direction of the torque that the leaning actuator 120 exerts on the leaning mechanism 121 to the opposite direction.

Specifically, for example, when a situation arises where the value of the lateral acceleration changes in the vehicle 1 that is turning and a force directed toward the inner side of the turn (a force that increases the lean angle) acts on the vehicle 1, in some cases, the torque value of the torque that has been previously exerted toward the inner side of the turn (in a direction of increasing the lean angle), such that the lean angle does not decrease, is changed without the direction being changed as shown in FIG. 15, and in other cases, the torque is changed to a torque directed toward the outer side of the turn (in a direction of reducing the lean angle). The torque in the direction of increasing the lean angle is, in other words, a torque in a direction of restricting a decrease in the lean angle. The torque in the direction of reducing the lean angle is, in other words, a torque in the direction of restricting an increase in the lean angle.

FIG. 16 shows correspondence between the value of the current applied to the leaning actuator 120 and the value of the lateral acceleration. Plus and minus of the current value shown on the axis of abscissa indicate the directions of the current applied to the leaning actuator 120. For example, a current value +X4 and a current value -X4 show that the values of the current applied to the leaning actuator 120 are the same at X4 but that the directions of the current applied to the leaning actuator 120 are opposite directions.

For example, in the case where the leaning actuator 120 is an electric motor, when the direction of the current applied to the electric motor is reversed, the rotation direction of the output shaft changes, so that the direction of the torque generated by the output shaft changes. Using this, the control device 100 changes the direction of the current applied to the leaning actuator 120 and thereby changes the direction of the torque generated by the leaning actuator 120.

When the current value is a positive value in FIG. 16, the leaning actuator 120 generates a torque in the direction of increasing the lean angle of the vehicle 1, i.e., in the direction of maintaining the lean angle by restricting the force that tries to reduce the lean angle. When the current value is a negative value, the leaning actuator 120 generates a torque in the direction of reducing the lean angle of the vehicle 1, i.e., in the direction of maintaining the lean angle by restricting the force that tries to increase the lean angle.

When the target lateral acceleration of the vehicle 1 that has started to turn is a value Y4, and the value of the current applied to the leaning actuator 120 to produce the target lateral acceleration Y4 is a value X4 as shown in FIG. 16, the control device 100 executes the imbalanced turning control so as to set the value of the current applied to the leaning actuator 120 to the value X4. By generating a torque according to the current value X4, the leaning actuator 120 holds the lean angle of the vehicle 1 in which the lateral acceleration has increased to the target lateral acceleration Y4 at the target lean angle. Thus, the leaning actuator 120 generates a torque in the direction of increasing the lean angle such that the lean angle of the vehicle 1 that turns in a state where the target lateral acceleration Y4 acts does not decrease.

In the example shown in FIG. 16, when the lateral acceleration acting on the vehicle 1 that is turning has decreased from the value Y4 to a value Y5 due to, for example, a change in the road surface conditions, the control device 100 changes the value of the current applied to the leaning actuator 120 from the positive value +X4 to a negative value -X5. Thus, the control device 100 changes the direction of the current applied to the leaning actuator 120 to the opposite direction from the previous direction and changes the current value from the value X4 to the value X5. As a result, the leaning actuator 120 changes the direction of the torque exerted on the leaning mechanism 121 to the opposite direction and generates a torque of a value according to the current value X5. By this change, the leaning actuator 120 exerts a torque in the direction of reducing the lean angle on the leaning mechanism 121 such that the lean angle of the leaning vehicle 1 does not increase. When the lateral acceleration has increased from the value Y5 to the value Y4 again, the control device 100 changes the value of the current applied to the leaning actuator 120 from the value -X5 to the value +X4, i.e., changes the direction of the current applied to the leaning actuator 120 to the opposite direction from the previous direction and changes the value of the current from the value X5 to the value X4.

In the case where the value of the lateral acceleration acting on the vehicle 1 that is turning has changed due to a disturbance of the road surface conditions etc., whether to change the value of the output torque of the leaning actuator 120 without changing the direction thereof as shown in FIG. 15, or to change the value and the direction of the output torque as shown in FIG. 16, is determined based on settings that are prepared beforehand. For example, setting information is prepared such that, at normal times, only the value of the output torque is changed without the direction thereof being changed as shown in FIG. 15, and that when a predetermined condition is met, the value and the direction of the output torque are changed as shown in FIG. 16. Based on the setting information, the control device 100 can change the value and the direction of the output torque of the leaning actuator 120.

While the case where the lateral acceleration and the leaning drive torque (leaning drive force) show a linear relationship has been shown in FIG. 14, FIG. 14 represents an example and is not intended to limit the relationship between the lateral acceleration and the leaning drive torque. For example, as indicated by the long dashed and short dashed lines as relationships between the lateral acceleration and the leaning drive force in the graph of FIG. 1, the relationship between the lateral acceleration and the leaning drive torque shown in FIG. 14 may have a curved shape or a stepped shape. The relationship between the lateral acceleration and the leaning drive torque can be set as appropriate according to, for example, the characteristics of the vehicle 1.

While the example in which the leaning drive force control is executed by controlling the value of the current applied to the leaning actuator 120 has been described, the method of the leaning drive force control is not limited to current control. For example, an aspect may be adopted in which the leaning drive force control is executed by control of a voltage applied to the leaning actuator 120 or electric power consumed in the leaning actuator 120. By electrically controlling the leaning drive force, i.e., the leaning drive torque of the leaning actuator 120, highly responsive leaning drive force control is realized. For example, the effects of the leaning drive force control can be easily produced without the influence of the road surface, even on a road with a low coefficient of friction on which the wheels 11, 12 tend to slip.

The leaning drive force control may be executed using a sensor that detects a physical quantity reflecting the magnitude of the lateral acceleration acting on the vehicle 1 in the imbalanced turning state, by the control device 100 controlling the leaning actuator 120 based on a detection result of the sensor. For example, using a sensor, at least one of the lateral acceleration acting on the vehicle 1 in the imbalanced turning state, the handlebar angle, the steered angle, the lean angle, the vehicle speed, and the lateral acceleration that reflect the magnitude of the lateral acceleration acting on the vehicle 1 in the imbalanced turning state may be detected, and the control device 100 may execute the leaning drive force control based on the detection result.

In this embodiment, the imbalanced turning control has been described with a focus on the control until the vehicle 1 is put in a turning state. After ending the turn, the rider returns the handlebar angle to 0 degrees, and the control device 100 performs control that returns the steered angle of the front wheels 11 and the lean angle to 0 degrees, so that the vehicle 1 returns to the moving-straight-forward state.

In this embodiment, the example has been described in which the control device 100 starts the imbalanced turning control upon detecting a change in the handlebar angle resulting from the rider's turning operation. However, an aspect may be adopted in which the imbalanced turning control by the control device 100 is started upon detecting a change in the steered angle, the lean angle, etc., of the vehicle 1. The turning operation performed by the rider includes an operation for changing the steered angle of the front wheels 11 and an operation for changing the lean angle of the vehicle 1. When the vehicle 1 turns, the handlebar angle, i.e., the steered angle of the front wheels 11 and the lean angle of the vehicle 1 change. The control device 100 may determine to start the imbalanced turning control based on at least one of the handlebar angle, the steered angle, and the lean angle having changed.

In this embodiment, the example has been described in which the vehicle 1 has the two front wheels 11 that are steered wheels and the one rear wheel 12 that is a driven wheel. However, an aspect may be adopted in which the vehicle 1 has one front wheel that is a steered wheel and two rear wheels that are driven wheels, or an aspect may be adopted in which the vehicle 1 has two front wheels that are steered wheels and two rear wheels that are driven wheels. Other than the aspect in which only the rear wheel 12 is driven, an aspect in which only the front wheels 11 are driven may be adopted, or an aspect in which both the front wheels 11 and the rear wheel 12 are driven may be adopted. For example, when an in-wheel motor is used, the steered wheels can also be driven. In any case, it is possible to turn the vehicle 1 by controlling the steered angle of the front wheels 11 and the lean angle so as to set the lateral acceleration acting on the center of gravity of the vehicle 1 to the target lateral acceleration as described above.

The configuration of the steering device 10 shown in this embodiment represents an example, and the configuration of the steering device 10 is not particularly limited as long as the steered angle of the steered wheels can be controlled as described above. Similarly, the configuration of the leaning device 20 shown in this embodiment represents an example, and the configuration of the leaning device 20 is not particularly limited as long as the lean angle of the steered wheels can be controlled as described above. Since the entire vehicle 1 including the front wheels 11, the rear wheel 12, and the vehicle body lean to the same angle during turning, the control that changes the lean angle of the vehicle 1 in the above-described example is equivalent to control that changes the lean angle of the vehicle body of the vehicle 1.

In this embodiment, regarding the imbalanced turning control, the processes of obtaining output values such as the target lateral acceleration, the target steered angle, and the target lean angle using the vehicle speed, the handlebar angle, etc., as input values has been described using graphs showing the relationships between the input values and the output values. However, an aspect may be adopted in which these processes are performed using two-dimensional maps or arithmetic expressions showing the relationships between the input values and the output values. Or an aspect in which three-dimensional maps are used may be adopted. For example, an aspect may be adopted in which the target lateral acceleration and the target lean angle are determined from the vehicle speed using a three-dimensional map showing the relationships among the vehicle speed, the target steered angle, and the target lean angle for producing the target lateral acceleration.

Regarding the imbalanced turning control described in this embodiment, the order of execution of the control of the steered angle by the steering device 10 and the control of the lean angle by the leaning device 20 is not particularly limited. The control of the steered angle and the control of the lean angle may be concurrently executed at the same time. The control for increasing the lean angle may be performed first before the control of the steered angle is performed. The control for increasing the steered angle may be performed first before and the control of the lean angle is performed. For example, the control device 100 may gradually increase the steered angle of the front wheels 11 and the lean angle of the vehicle 1 to set them to the target steered angle and the target lean angle.

### Reference Signs List

- 1: Vehicle
- 2: Cowl
- 10: Steering device
- 11 (11L, 11R): Front wheel
- 12: Rear wheel
- 20: Leaning device
- 30: Handlebar
- 40: Frame
- 50: Prime mover
- 60: Seat
- 70: Power transmission unit
- 100: Control device
- 110: Steering mechanism drive unit (steering actuator)
- 111: Steering mechanism
- 120: Leaning mechanism drive unit (leaning actuator)
- 121: Leaning mechanism

## Claims

1. A leaning vehicle comprising:
wheels including two front steered wheels and at least one rear wheel;
a leaning actuator that is configured to generate a leaning drive force for changing a lean angle of a vehicle body when the leaning vehicle turns;
a steering actuator that is configured to change a steered angle of the two front steered wheels when the leaning vehicle turns; and
a control device that is configured to control at least the leaning actuator and the steering actuator,
the leaning vehicle turning by leaning the vehicle body,
wherein, when such a turning state in which a lean angle that the vehicle body forms with a perpendicular axis perpendicular to a ground surface is set to an angle that a resultant force, acting on the vehicle body, of a gravitational force and a centrifugal force directed toward an outer side of a turn forms with the perpendicular axis is defined as a balanced turning state,
the control device is configured to control the leaning actuator and the steering actuator so as to create an imbalanced turning state in which a lateral acceleration occurs that is larger than a lateral acceleration acting on the vehicle body in the balanced turning state, and, when a magnitude of the lateral acceleration acting on the vehicle body in the imbalanced turning state has decreased, control the leaning actuator so as to reduce a magnitude of the leaning drive force.

2. The leaning vehicle according to claim 1, wherein the control device is configured to control the leaning actuator and the steering actuator so as to create the imbalanced turning state in which the lateral acceleration occurs that is larger than the lateral acceleration acting on the vehicle body in the balanced turning state, and, when the magnitude of the lateral acceleration acting on the vehicle body in the imbalanced turning state has decreased, control the leaning actuator so as to reduce the magnitude of the leaning drive force by changing at least one value among a current, a voltage, and electric power that are applied to the leaning actuator.

3. The leaning vehicle according to claim 1 or 2, wherein the control device is configured to control the leaning actuator and the steering actuator so as to create the imbalanced turning state in which the lateral acceleration occurs that is larger than the lateral acceleration acting on the vehicle body in the balanced turning state, and, when the magnitude of the lateral acceleration acting on the vehicle body in the imbalanced turning state has decreased, control the leaning actuator so as to reduce the magnitude of the leaning drive force by controlling the leaning actuator according to a physical quantity that is detected by a sensor and reflects the magnitude of the lateral acceleration.

4. The leaning vehicle according to any one of claims 1 to 3, wherein the control device is configured to control the leaning actuator and the steering actuator so as to create the imbalanced turning state in which the lateral acceleration occurs that is larger than the lateral acceleration acting on the vehicle body in the balanced turning state, and, when the magnitude of the lateral acceleration acting on the vehicle body in the imbalanced turning state has decreased, control the leaning actuator so as to reduce the magnitude of the leaning drive force by controlling the leaning actuator according to at least one of a handlebar angle, the steered angle, the lean angle, a vehicle speed, and the lateral acceleration that are detected by sensors and reflect the magnitude of the lateral acceleration.
